(19) Europäisches Patentamt
European Patent Office
Office européen des brevets

(11) **EP 2 031 321 A2**

(12) **EUROPEAN PATENT APPLICATION**

(43) Date of publication:
**04.03.2009 Bulletin 2009/10**

(51) Int Cl.:
***F24H 1/10*** *(2006.01)*

(21) Application number: **08011390.5**

(22) Date of filing: **24.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **29.08.2007 KR 20070087053**

(71) Applicants:
• **Mustafaev, Rafael**
  **Vasilevskogo, Dom 3, Kv16 (RU)**

• **Jang, Hak Jung**
  **Shinjeong 1-dong**
  **Yangcheon-Gu**
  **Seoul (KR)**

(72) Inventor: **Mustafaev, Rafael**
  **Tver City, Poselok Sakharovo (RU)**

(74) Representative: **Lemcke, Brommer & Partner**
  **Patentanwälte**
  **Bismarckstrasse 16**
  **76133 Karlsruhe (DE)**

(54) **Fluid heater**

(57)     Disclosed is a fluid heater that can be used as a heater in a residence or an industrial facility or that can be used to heat water in fishery, agricultural, and transportation industries. In particular, disclosed is a fluid heater that heats a fluid using a multi-channel structure of the flow of fluid passing through a branching system, instead of using additional fossil fuels, and that can suppress the generation of vibration and noise while heating the fluid.

[fig 4]

**Description**

BACKGROUND OF THE INVENTION

1. Field of the Invention

The present invention relates to a fluid heater that can be used as a heater in residences and industrial facilities, and that can be used for water heating in the fishery, agricultural, and transportation industries, and more particularly to a fluid heater that can heat a fluid while suppressing the generation of vibrations and noise during heating using the principle of a multi-channel structure of the flow of fluid through a branching system instead of using additional fossil fuel.

2. Description of the Related Art

A general example of a device using heated water is a boiler, which is used for a variety of purposes.
A boiler is a device which generates vapor by transferring the heat of combustion to water by combusting fossil fuel, such as oil and coal.
However, the boiler has the following problems.
First, as it is known, fossil fuels are located underground in limited areas in the world, and thus natural resources are owned by a limited number of countries. Accordingly, the balance between demand for and supply of fossil fuels is unstable and there is the possibility that non-oil producing countries will suffer from oil shock. Further, oil cannot be recycled, and reserves thereof are limited. Still further, oil has been a major cause of environmental pollution, and we are suffering from severe environmental pollution these days. That is, the pollution of large cities, attributable to exhaust gas exhausted from factories and automobiles, and air pollution, attributable to gas evaporated naturally from oil storage tanks and gas from oil refinery facilities, becomes severe.
Second, it is known that fossil fuels generate a large amount of air pollutants due to incomplete combustion, attributable to the low heat efficiency thereof.
Third, fossil fuels are gradually being depleted, and thus the development of alternative fuels is longed for.
Fourth, heaters in a variety of sizes, which have heat efficiency suitable for the size of places and buildings in which the heaters are installed, are required, but nowadays there is a very small variety of heater sizes, which leads to low heat efficiency.

SUMMARY OF THE INVENTION

The invention is made in view of the above mentioned problems, and an object of the invention is to provide a fluid heater which can operate without using fossil fuels or can enhance the heat efficiency of the fossil fuels, which results in a decrease in air pollution and reduced dependency on fossil fuels for heating.
A further object of the invention is to provide a fluid heater which can maximize the heat efficiency using the principal of a multi-channel structure of the flow of fluid passing through a branching system, and which can heat a fluid by water circulation without increasing variation in a physical vacuum state while suppressing the generation of vibration and noise.
A still further object of the invention is to provide a fluid heater which is not limited with respect to installation place, which can be manufactured in a variety of sizes, and has a wide range of heat efficiencies.
In order to accomplish the advantages and objects of the invention, there is provided a fluid heater including a generation pipe which moves a fluid upward by the operation of a pumping device, a damper provided at an upper portion of the generation pipe for distributing introduced fluid into vortex chambers using cylindrical head members, fluid flow acceleration members provided between the damper and vortex pipes and provided with the corresponding vortex chambers, which circulate the fluid introduced from the damper, therein, and one or more vortex pipes coupled to the fluid flow acceleration members so as to communicate with the corresponding fluid flow acceleration members in order to discharge the fluid outside.
It is preferable that the cross-sectional area of the cylindrical head member provided at the outer surface of the damper be 0.5 times the cross-sectional area of the vortex pipe.
It is preferable that the area of the vortex chamber be 0.8 to 0.85 times the area of the cylindrical head member.
It is preferable that the cross-sectional area of the damper be equal to the sum of the cross-sectional areas of the vortex pipe.
The fluid heater according to this invention has the following advantageous effects.
First, it can maximize the heat efficiency of a heater using the fossil fuel, which is used in residences or large-scale buildings, and can be used as a batch-type heater in order to substitute for a boiler. Accordingly, it is possible to decrease air pollution and reduce dependency on the fossil fuel.

Second, it can be manufactured in a small size so that it can be installed near a place where heated fluid is needed. As a result, it is possible to maximize the heat efficiency and to minimize the evaporation of heated fluid attributable to the transportation of the heated fluid.

Third, in a space in which high heat efficiency is required, it is used as a substitution for the conventional boiler using fossil fuels. Accordingly, it is possible to minimize air pollution and environmental pollution.

Fourth, the fluid heater of the invention has a simple structure and can be a variety of sizes. Accordingly, the fluid of the heater can be manufactured in a custom-made size and thus it can be installed in a variety of installation spaces, such as a train or a private bedroom.

Fifth, the fluid heater of the invention can be applied to a variety of devices which use heated water besides a boiler.

Sixth, the fluid heater of the invention can generate an amount of heat which is suitable for the scale of the place or building where the heater is used. Accordingly, it is possible to prevent the heat from being wasted.

BRIEF DESCRIPTION OF THE DRAWINGS

The above and other features and advantages of the present invention will be more clearly understood from the following detailed description when taken in conjunction with the accompanying drawings, in which:

> FIG. 1 is a perspective view illustrating a fluid heater according to one embodiment of the invention;
> FIG. 2 is a perspective view illustrating the fluid heater according to one embodiment of the invention, which is connected to a pumping device;
> FIG. 3 is an exploded perspective view illustrating a fluid flow acceleration member of the fluid heater according to one embodiment of the invention;
> FIG. 4 is a cross-sectional view illustrating a damper of the fluid heater according to one embodiment of the invention;
> FIG. 5 is a cross-sectional view illustrating the flow of fluid in the fluid heater according to one embodiment of the invention; and
> FIG. 6 is a diagram illustrating test equipment for testing the fluid heater according to one embodiment of the invention.

DETAILED DESCRIPTION OF THE INVENTION

Hereinafter, a preferred embodiment of the invention will be described in detail with reference to the accompanying drawings.

A fluid heater according to embodiments of the invention will be explained with reference to the accompanying drawings.

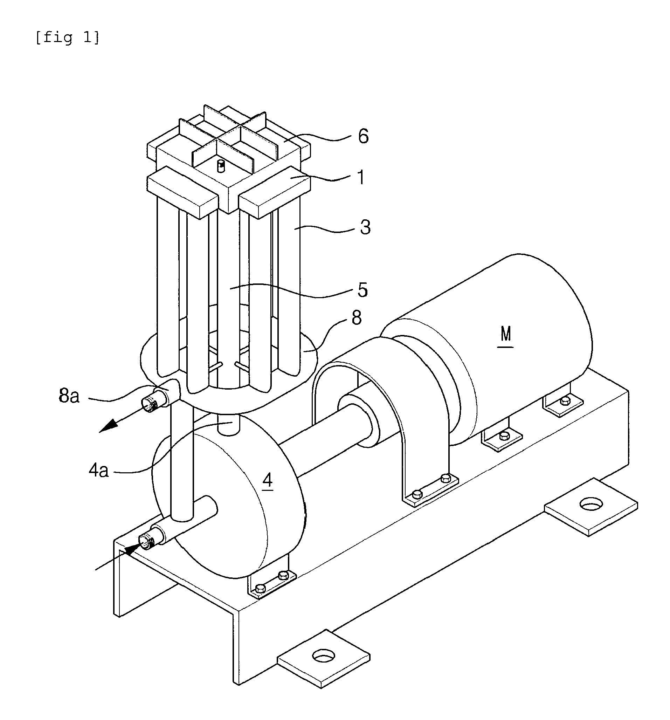

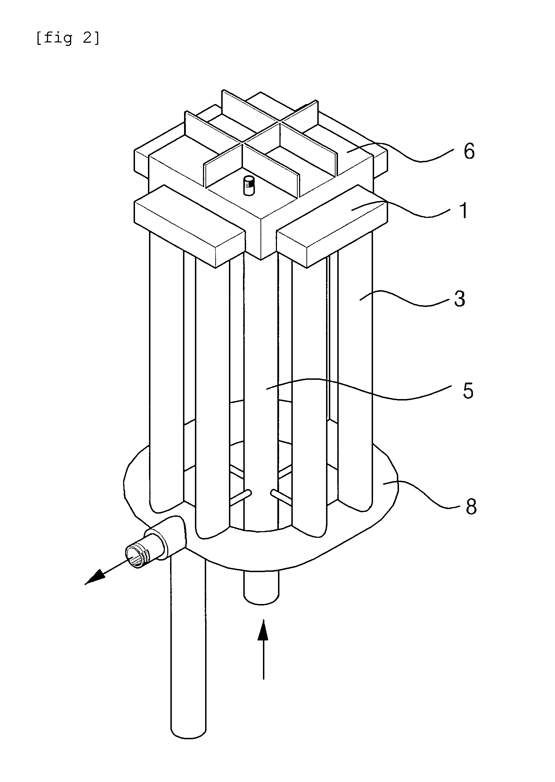

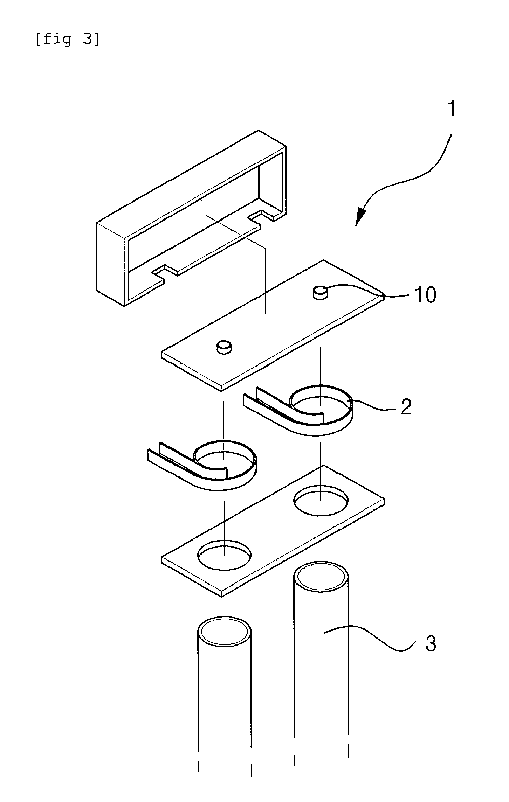

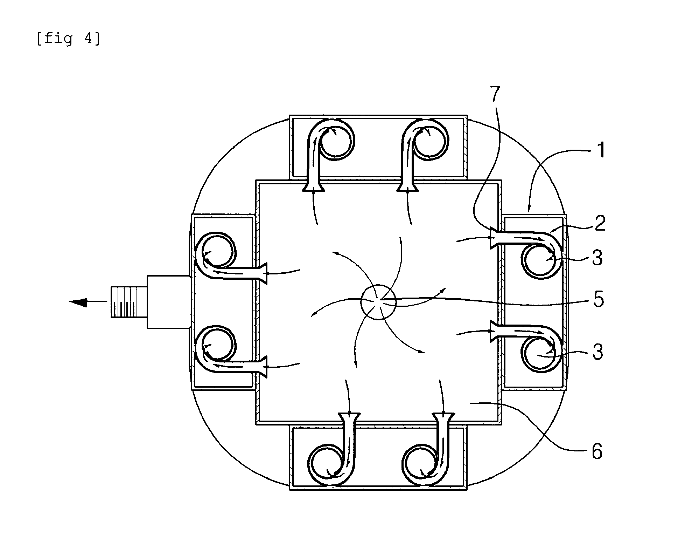

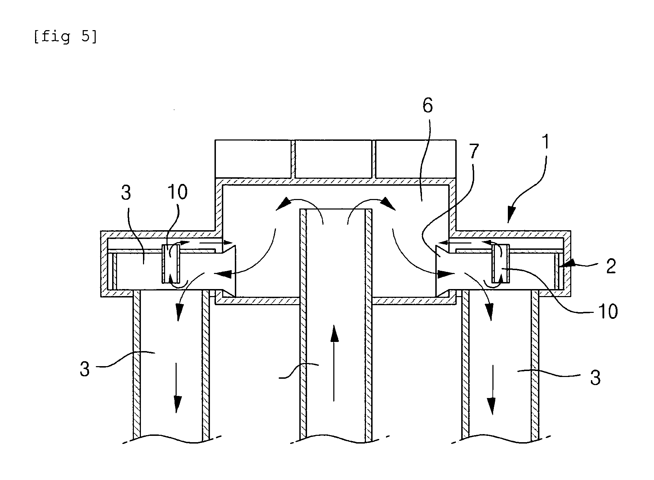

FIG. 1 is a perspective view illustrating a fluid heater according to one embodiment of the invention, FIG. 2 is a perspective view illustrating a pumping device equipped with a fluid heater according to one embodiment of the invention, FIG. 3 is an exploded perspective view illustrating a fluid flow acceleration member of the fluid heater according to one embodiment of the invention, FIG. 4 is a cross-sectional view illustrating a damper of the fluid heater, and FIG. 5 is a sectional view illustrating the fluid flow in the fluid heater according to one embodiment of the invention.

As shown in the accompanying drawings, the fluid heater includes a generation pipe 5 which moves a fluid upward by the operation of a pumping device 4, a damper 6 provided at an upper portion of the generation pipe 5 for distributing the introduced fluid into vortex chambers 2 through corresponding cylindrical head members 7, fluid flow acceleration members 1 disposed between the damper 6 and the vortex pipes 3 and provided with corresponding vortex chambers 2 which circulate the fluid introduced from the damper 6, one or more vortex pipes 3 coupled so as to communicate with the corresponding fluid flow acceleration members 1 in order to transfer the fluid to a discharge pipe 8, and the discharge pipe 8, which discharges the fluid flowing through the vortex pipes 3 outside.

The cross-sectional area of the cylindrical head member 7 at the outer circumferential surface of the damper 6 is 0.5 times the cross-sectional area of the vortex pipe 3.

The area of the vortex chamber 2 is 0.8 to 0.85 times the cross-sectional area of the cylindrical head member 7.

The cross-sectional area of the damper 6 is equal to the sum of the cross-sectional areas of the vortex pipes 3.

Hereinafter, the operation of the fluid heater according to one embodiment of the invention will be described.

First, one end of the generation pipe 5 of the fluid heater is coupled to a discharge portion of the pumping device 4, and a fluid inflow port 4a of the pumping device 4 is connected with a discharge portion 8a of the fluid heater 100 so that the fluid can be circulated. Then, fluid is supplied to a fluid circulation passage.

After completion of the above-mentioned installation, a power switch of the pumping device 4 is turned on, and the fluid in the generation pipe 5 is pressurized and thus introduced into the damper 6.

At this time, loop-shaped waveforms are formed on the surface of the fluid due to periodical vibrations caused by the rotation of a blade, which is attributable to the operation of the pumping device, and are extinguished in the longitudinal direction.

The other end of the generation pipe 5 is coupled so as to communicate with the inside of the damper 6 so that a portion of the other end of the generation pipe 5 is inserted into the damper 6. The generation pipe 5 is displaced to the side surface of the damper 3 at a ratio of 3 to 5, and wave motions reflected from the side surface of the damper 6 meet the loops which carry the main energy of inverted-phase wave motions. Accordingly, resonance with even order harmonics in the generation pipe 5 and damping in the damper 6 progresses. As a result, damping of the wave motions progresses, and heat is generated.

The fluid discharged from the damper 6 is distributed into a plurality of vortex pipes 3.

A portion of the fluid is introduced into the vortex chambers 2 and encircles the vortex pipes 3.

The fluid discharged in the axial direction of the vortex pipe 3 returns to the damper 6 through central holes 10 of the vortex chambers 2 and is mixed with the fluid in the damper 6. As a result, additional heat is generated.

Each of the central holes 10 is formed in the form of a cylindrical attaching member. It is preferable that the cross-sectional area of each of the attaching members be about 0.5 times the cross-sectional area of each of the vortex pipes 3.

The fluid heater 100 having the above-mentioned structure can minimize the loss of a heat-carrying medium, can remove cavitations, and can establish good conditions under which sonic vibrations, which cause fluctuations of a physical vacuum portion of the heat-carrying medium, can be started and damped. When the physical vacuum state fluctuates, molecular bonding breaks. As a result, the energy of the fluid changes to the level of an element particle, and the magnetic moment of water molecules also changes. Accordingly, heat energy is emitted from the inside of a heater as well as the fluid heater, molecular bonding is formed, and fluctuation of a physical vacuum portion in the heat-carrying medium is generated. A portion of the heated heat-carrying medium is introduced into a heater from the fluid heater, and the rest of the heat-carrying medium returns to the fluid heater through a bypass (not shown), which acts so as to break the molecular bonds. The fluid passes through the heater and then returns to the pump. Subsequently, the fluid is introduced into the fluid heater. In the fluid heater, when the temperature of the fluid reaches a predetermined minimum level, the power of the pumping device is turned on. Conversely, when the temperature of the fluid reaches a predetermined maximum level, the power is automatically turned off. That is, the fluid heater operates in an automatic mode.

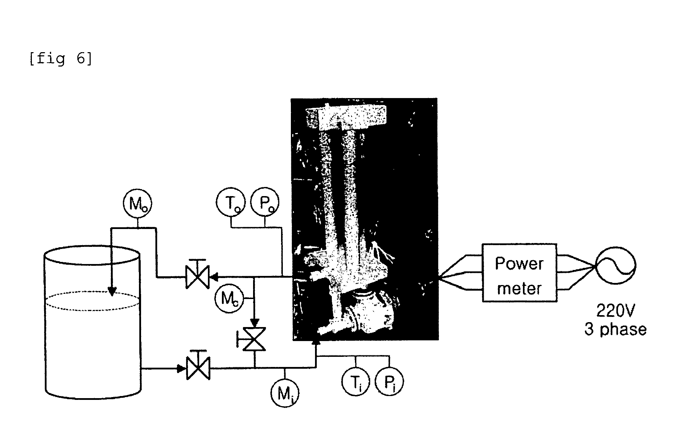

The performance test of the fluid heater manufactured according to one embodiment of the invention is performed. The performance test is performed in the state in which the fluid heater is structured as shown in FIG. 6.

1) Definition of efficiency

$$\eta = Q/W * 100\%$$

Q: Output energy (Joule)
W: Input (supply) power (Joule)

2) Heat energy output from VHG

$$Q = Q1 + Q2 + Q3$$

Q1: hot-water heating

$$Q1 = C1 * m1 * \Delta T$$

$$C1 = 4.2 * 10^3 (Joule/Kg°C)$$

ml: mass of water (Kg)

In this test, the total mass of water in a heating system, ml = 35Kg, and three thermostatic sensors are installed in pipelines connected to an auxiliary water tank in order to obtain energy for heating using hot water.

While the test is performed, the water level in the auxiliary tank is recorded. The temperature of the pipeline is different from the temperature of the main stream of the water, and the water level in the auxiliary water tank rises according to the increase in the temperature of the main stream.

The amount and temperature change of water in the auxiliary pipeline is calculated on the basis of this assumption.

$$Q2 = C2 * m2 * \Delta T$$

C2 = 480(Joule/Kg°C)
m2: mass of steel structure (Kg) = 121.5 Kg

In the above equations, m2 is the sum of masses of VHC, the pumps, and all pipelines.

For example, VHG is 57 Kg, a pump is 49 kg, a motor is 109 Kg, and the pipelines are 15.5 Kg.

The mass of the pump is not taken into consideration because the conductive area of the surface thereof is very small.

Q3 is heat energy emitted to the air.

The VHG and the pipelines undergo insulation processing with glass wool and thus it was possible to decrease heat dissipation.

3) Power

$$W = P * \tau$$

Here, P is effective power (kW) supplied to the motor, and $\tau$ is the operation period of the motor.

The effective power is measured by a three-phase power analyzer disposed between the motor and a power converter. The supplied power is summed every 30 seconds while time passes, and efficiency is calculated therefrom.

4) Error assumption

| Cause of error | Measurement error / Sum | Error of efficiencies |
|---|---|---|
| Mass of water | ±1Kg/35Kg | ±2% |
| Mass of steel | ±10Kg/121.5Kg | ±2.3% |
| Heat emission to air | | less than -3% |

5) Others

Loss of heat attributable to heat emission to the air is assumed, taking the action of an insulator and the surface area of the pipelines into consideration. It is assumed that the heat efficiency of an additional pipeline which is 17 meters long and has an outer diagram of 38 mm is different by 5% in an insulated and uninsulated state.

6) Result

6-1) A diagram of measured data

Effective power and pressure are dramatically decreased at 75°C or more.
The efficiency does not decrease even though the temperature of water is lowered.

6-2) Result

VHG direction

Measurement is performed in four VHG directions.
Mean efficiency is in the range 88 to 92%.
In this test, affection of directions is not observed.

**Claims**

1. A fluid heater comprising:

    a generation pipe which moves a fluid upward by operation of a pumping device;
    a damper formed at an upper portion of the generation pipe for distributing an introduced fluid into vortex chambers through cylindrical head members;
    fluid flow acceleration members formed between the damper and vortex pipes and provided with the vortex chambers which form a vortex in the fluid introduced from the damper;
    one or more vortex pipe(s) coupled to the fluid flow acceleration members 1 so as to communicate with the fluid flow acceleration members for transferring the introduced fluid to a discharge pipe; and
    the discharge pipe for discharging the fluid passing out the vortex pipes outside the fluid heater;

    wherein the fluid moved upward by the operation of the pumping device is introduced into the damper via the generation pipe, is then distributed into the fluid flow acceleration members formed on outer sides of the damper, and is finally discharged outside the fluid heater via the vortex chambers inside the fluid flow acceleration members, the vortex pipes, and the discharge pipe.

2. The fluid heater according to claim 1, wherein a cross-sectional area of the cylindrical head member at an outer surface of the damper is 0.5 times a cross-sectional area of the vortex pipes.

3. The fluid heater according to claim 1 or 2, wherein a cross-sectional area of the vortex chamber is 0.8 to 0.85 times a cross-sectional area of the cylindrical head member.

4. The fluid heater according to claim 1, wherein a cross-sectional area of the damper is equal to a sum of areas of cross-sections of the vortex pipes.

[fig 1]

[fig 2]

[fig 3]

[fig 4]

[fig 5]

[fig 6]